# EUROPEAN PATENT SPECIFICATION

(11) **EP 0 371 773 B1**
(45) Date of publication and mention of the grant of the patent: **26.01.1994**
(21) Application number: 89312392.7
(22) Date of filing: 29.11.1989
(51) Int. Cl.: B60J 1/02, B29C 67/18

(54) **Windows for automobiles or the like, and method of manufacturing the same**
Fenster für Kraftfahrzeuge und deren Herstellungsverfahren
Fenêtre pour véhicules automobiles ou semblables et méthode de fabrication de celle-ci

(30) Priority: 29.11.1988 JP 301665/88
(43) Date of publication of application: 06.06.1990
(73) Proprietor: HASHIMOTO FORMING INDUSTRY CO LTD, Yokohama City Kanagawa Pref. (JP)
(72) Inventor: Ohtake, Shinichi Hashimoto Forming Ind. Co. Ltd., Yokohama City Kanagawa Pref. (JP); Tamura, Tatsuya Hashimoto Forming Ind. Co. Ltd., Yokohama City Kanagawa Pref. (JP)
(74) Representative: Senior, Alan Murray

(56) References cited:
- EP-A- 0 145 443
- DE-A- 3 504 907
- MACHINE DESIGN. vol. 54, no. 28, December 1982, CLEVELAND US pages 99 - 102;DONALD D. REGER: "THE BEST OF TWO WORLDS IN PLASTICS PROCESSING"

## Description

The present invention relates to a window for automobiles or the like, including a window plate and a frame member composed of a thermoplastic synthetic resin material and provided integrally with the window plate, and also to a method of manufacturing such windows,

Automobile windows wherein a window plate is integrally provided with a frame member composed of a thermoplastic synthetic resin material is advantageous in that, since it is not necessary to prepare a window molding member as a separate component from the window plate, the number of components and assembly steps can be reduced to realize an improved manufacturing productivity in the assembly lines of automobile factories.

There is disclosed, e.g. in U.S. Patent US-A-4,139,234 and Japanese Patent Application Laid-open Publication JP-A-99 817/81 and JP-A-1 737/82, a method of manufacturing such automobile windows in accordance with the precharacterizing portions of claims 1 and 8 and wherein the peripheral edge of a window plate is placed in an injection mold including upper and lower mold halves, and a molten thermoplastic synthetic resin material is injected into the cavity space between the upper and lower mold halves through at least one gate. While the above-mentioned method permits formation of an integral frame member along the edge of the window plate, a number of problems are left still unsolved, which are as follows.

First of all, thermoplastic synthetic resin material may have a relatively high viscosity during the injection into the mold cavity, depending upon physical and/or chemical properties of the material. Then, the injection has to be carried out at an elevated temperature of the mold to lower the viscosity of the resin material and avoid premature cooling of the resin material before it has been completely distributed within the mold cavity, and under a relatively high injection pressure to realize a uniform distribution of the resin material throughout the entire cavity space. The elevated temperature to which the mold has to be heated necessarily requires a longer time until completion of the injection and cooling of the resin material, and makes it difficult to achieve an improved manufacturing productivity. Furthermore, the relatively high injection pressure often results in undesirable formation of burrs or flashing along the parting surface of the mold halves, or in damages of the window plate due to a higher tightening force applied from both side by the mold halves for withstanding the injection pressure. Also, when the frame member is to be provided with an integral, strip-like ornamental element applied on its outer surface, or with clips or the like fitting elements partly embedded in the synthetic resin material by a so-called insert-molding process, these elements may be deformed or subjected to dislocation by the injection pressure.

Secondly, the frame member placed to cooling is more or less accompanied by shrinkage, thereby subjecting the window plate to a severe compression stress. Thus, when the window plate is composed of a brittle glass plate, it is not always possible to prevent formation of cracks in the window plate. Particularly when the window plate has a surface curvature, the window plate is often subjected to a substantial bending stress by which the curved surface of the window plate undergoes an undesirable deformation. These problems are more significant when the window plate is composed of a transparent synthetic resin material with a relatively lower structural rigidity than inorganic glass. Moreover, the frame member is generally formed to surround the edge of the window plate from both sides thereof, and thus includes a substantially U-shaped cross-sectional portion formed of relatively thin lip and web sections on the outer and rear surfaces of the window plate, respectively, and a relatively thick bridge section for connecting the lip and web sections with each other. The material thickness of the frame member with such a sudden change results in a retarded cooling rate of the thick bridge section and in a resultant formation of sink mark on its outer surface.

Finally, in addition to the above, the window plate is accompanied by certain dimensional fluctuation due to practical difficulties in preparing window plates of a satisfactorily constant shape, while the volume of the mold cavity remains always constant. An optimum amount of thermoplastic synthetic resin material to be injected into the mold cavity thus varies for each window plate, depending upon the length with which the window plate is inserted into the mold cavity. From practical viewpoint, however, it is not very appropriate to individually adjust the amount of the resin material for each shot, and it has thus been a general practice to inject into the mold cavity a substantially constant amount of resin material, without regard to dimensional fluctuation of the window plate at all. It is of course that injection of an excessive amount of resin material into the mold cavity, too, results in formation of burrs or flashing along the parting surface of the mold halves, while insufficiency in the injected amount of the resin material gives rise to a undesirable tendency of sink mark to appear on the outer surface of the frame member.

It is therefore a primary object of the present invention to provide a novel and improved window for automobiles or the like, which includes a frame member formed integrally with the window plate and composed of a thermoplastic synthetic resin material, and which can be readily manufactured without the above-mentioned drawbacks.

Another object of the present invention is to provide a novel and improved method of manufacturing windows for automobiles or the like, including a frame member formed integrally with the window plate and composed of a thermoplastic synthetic resin material, by which the windows can be readily manufactured without the above-mentioned drawbacks.

According to one aspect of the present invention, there is provided a window for an automobile or the like, comprising a window plate and a frame member, which frame member comprises a thermoplastic synthetic resin material formed into an integral structure with the window plate by molding along at least one edge thereof, wherein said frame member includes a substantially U-shaped cross-sectional portion comprising lip and web sections which are spaced from and opposed to each other on outer and rear surfaces of the window plate, respectively, and a bridge section connecting the lip and web sections with each other (Window of the type disclosed e.g. in US-A-4,139,234 or JP-A-99 817/81 or JP-A-1 737/82), characterized in that said frame member has a longitudinally continuous hollow inner space.

According to another aspect of the present invention, there is provided a method of manufacturing windows of the above-mentioned structure, comprising the steps of:
preparing a mold having surfaces defining a cavity of a predetermined volume therein, said cavity being of a configuration which corresponds to said frame member;
placing at least one edge of the window plate in the mold cavity;
injecting into the mold cavity a predetermined amount of thermoplastic synthetic resin material in its molten state, and placing said synthetic resin material under cooling and solidification in said mold cavity, thereby to form the frame member which is integral with said window plate (Method of the type disclosed e.g. in US-A-4,139,234 or JP-A-99 817/81 or JP-A-1 737/82) characterized in that said predetermined amount of thermoplastic synthetic resin material is smaller than said volume of the cavity;
and by the step before solidification of the thermoplastic synthetic resin material a step of injecting compressed gas into the thermoplastic synthetic resin material in said cavity to urge said synthetic resin material against said surfaces of the mold defining the cavity whereby
the frame member has a longitudinally continuous hollow inner space.

Further developments in line with claims 1 and 8 are referred to in the dependent claims.

The window according to the present invention, including a frame member which is integral with the window plate and whose bridge section connecting the lip and web sections with each other has a longitudinally continuous hollow inner space, serves to effectively protect the window plate from damages or deformation upon shrinkage of the frame member after it has been formed, without being subjected to severe compression and/or bending stress, due to the deformability of the hollow inner space in the bridge section of the frame member.

Furthermore, in the method of manufacturing the windows according to the present invention, the frame member is formed by injecting into the mold cavity a relatively small amount of thermoplastic synthetic resin material as compared with the volume of the cavity, and by injecting the compressed gas into the synthetic resin material in the cavity. Thus, even a synthetic resin material with a relatively high viscosity can be uniformly distributed throughout the cavity, without application of a higher injection pressure as is the case in conventional injection process. Moreover, the synthetic resin material in the mold cavity can be sufficiently urged by the injected compressed gas against the surfaces of the mold defining the cavity to realize a desired configuration of the frame member without undesirable sink mark.
Fig. 1 is a fragmentary perspective view, partly in section, of an automobile window according to one embodiment of the present invention;
Fig. 2 is a cross-sectional view of the window;
Figs. 3 to 6 are sectional views showing successive steps of the method for manufacturing the window according to the present invention;
Fig. 7 is a fragmentary sectional view showing another example of the mold which includes a gas injection tube separately from the gate; and
Fig. 8 is a fragmentary sectional view similar to Fig. 4 and showing that the present invention can be applied to manufacture windows whose frame is provided with a strip-like ornamental portion on its outer surface.

The present invention will now be explained in further detail, by referring to some preferred embodiments shown in the accompanying drawings.

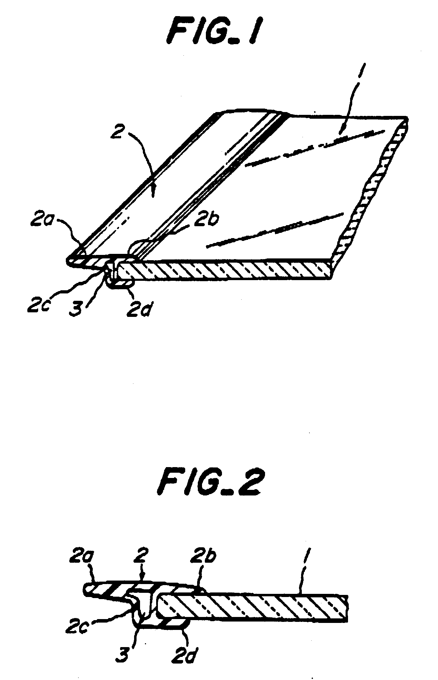

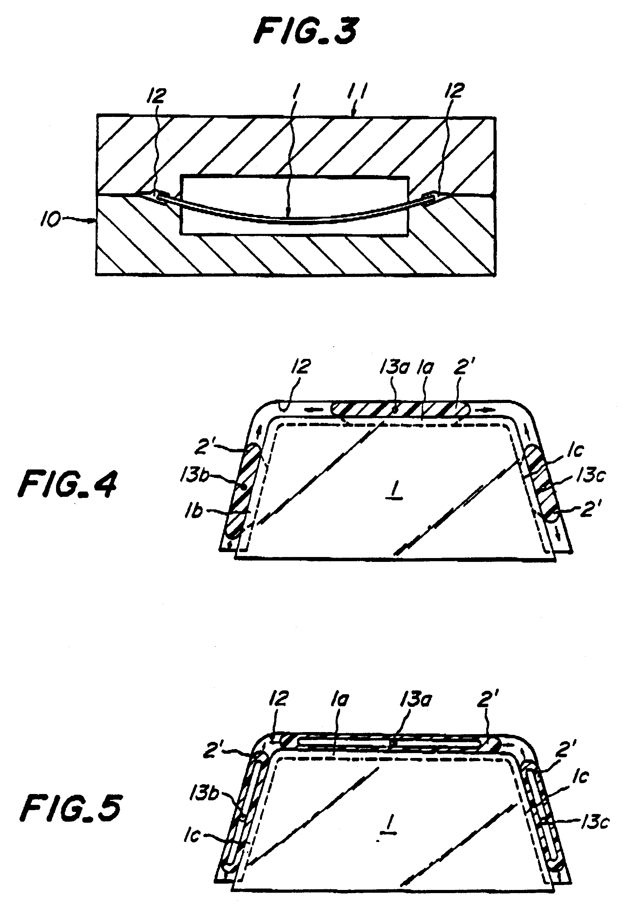

There is shown in Figs. 1 and 2 an automobile front window according to one embodiment of the present invention, which includes a window plate 1 and a frame member 2 formed into an integral structure with the window plate 1 along upper and side edges thereof. The window plate 1 is composed of an inorganic glass or a transparent synthetic resin, such as acrylic resin or polycarbonate resin, and may have a predetermined two or three dimensional surface curvature, as can be seen from Fig. 3. The frame member 2, in turn, is composed of an appropriate thermoplastic synthetic resin material including general purpose resins such as polyvinylchloride resin, polyethylene resin, plolystyrene resin and ABS resin, as well as so-called engineering plastic materials such as polyamide resin or modified PPO resin. The frame member 2 is of a unitary structure, and includes first and second lip sections 2a, 2b, a bridge section 2c and a web section 2d. The first lip section 2a is adapted to engage with a predetermined location of an automobile body panel (not shown). The second lip section 2b and the web section 2d are spaced from and opposed to each other on the outer and rear surfaces of the window plate 1, and connected with each other by the bridge section 2c. Thus, the lip section 2b, the bridge section 2c and the web section 2d form a substantially U-shaped cross-sectional portion of the frame member 2. The bridge section 2c is formed, according to the present invention, with a longitudinally continuous hollow space 3 therein.

With the above-mentioned structure of the window according to the present invention, the frame member 2 includes a bridge section 2c with a longitudinally continuous hollow inner space 3, and is thus capable of adequately compensating for the compression force arising from thermal shrinkage of the frame member 2 after it has been formed, due to the deformability of the hollow inner space 3; hence, it is readily possible to protect the window plate 1 from damages or deformation.

The window of the above-mentioned structure can be manufactured by a method according to the present invention, which includes the steps to be particularly described hereinafter.

The method according to the present invention begins with the preparation of a window plate 1 which includes upper and side edges 1a, 1b, 1c to be formed with the frame member 2. The method also makes use of a mold comprising a cavity plate 10 and a core plate 11 adapted to cooperate with each other to define a cavity 12 of a configuration which substantially corresponds to the frame member 2 to be formed. For introducing thermoplastic synthetic resin material into the cavity 12 in the mold, the cavity 12 is preferably provided with a plurality of gates 13a, 13b, 13c corresponding to the upper and side edges 1a, 1b, 1c of the window plate 1, respectively. When, on the other hand, only one edge of the window plate 1 is to be formed with the frame member 2, provision of a single gate in the cavity 12 may be sufficient to allow introduction of a required amount of thermoplastic synthetic resin material into the cavity 12. The gates 13a, 13b, 13c are arranged at those regions of the mold which correspond to the bridge section 2c of the frame member 2.

The window plate 1 is applied with adhesive material layers along the edges 1a, 1b, 1c to be formed with the frame member 2, on both outer and rear surface regions thereof, and is then mounted on the cavity plate 10, preferably with its concave rear side oriented vertically upwardly as shown in Fig. 3, to facilitate the positioning of the window plate 1. Subsequently, the cavity plate 10 and the core plate 11 are tightly connected with each other, with the window plate 1 clamped between the two plates 10, 11 and the edges 1a, 1b, 1c projecting into the cavity 12.

In the next step, as particularly shown in Fig. 4-6, a predetermined amount of molten thermoplastic synthetic resin material 2′ is injected into the cavity 12 of the mold through the gates 13a, 13b, 13c. The total amount of the resin material 2′ to be injected is smaller than the volume of the cavity 12, and is preferably about 80-90% of the cavity volume. The resin material 2′ injected into the cavity 12 begins to flow along the edges 1a, 1b, 1c of the window plate 1 on both sides of each gate 13a, 13b, 13c.

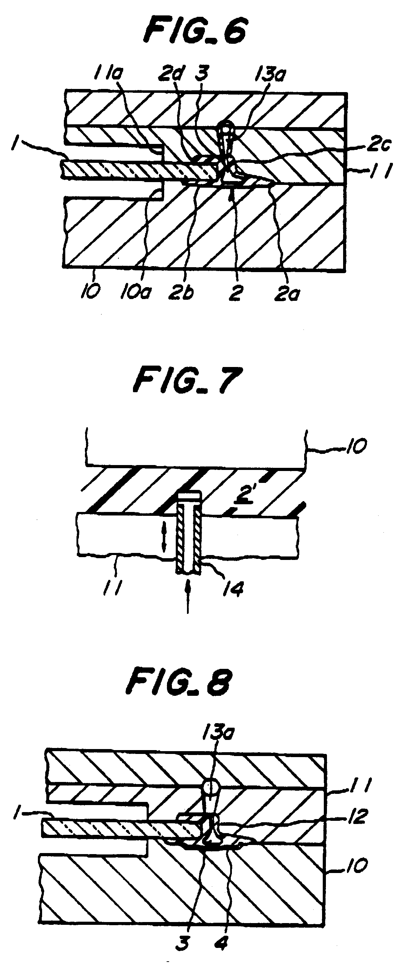

Subsequently to the injection of the synthetic resin material 2′ into the cavity 12, or simultaneously therewith as the case may be, compressed gas under the pressure on the order of several 10 kg/cm², which may be nitrogen or the like inert gas or air, is injected from the gates 13a, 13b, 13c into the synthetic resin material 2′, preferably by using the injection nozzles of an injection machine (not shown). As shown in Figs. 5 and 6, the compressed gas serves to achieve a uniform distribution of the resin material 2′ throughout the entire cavity 12, while at the same time urging the resin material 2′ against the inner surfaces of the cavity 12, thereby forming the hollow inner space 3 in the resin material 2′. On this occasion, so-called weld lines formed by merger and fusion of two flows of resin material 2′ from neighboring gates 13a, 13b, 13c are formed at the corner regions of the window plate 1 between the upper edge 1a and the side edges 1b, 1c. The pressure of the compressed gas is maintained until completion of the cooling and solidification of the resin material 2' in the cavity 12, after which the cavity plate 10 and the core plate 11 are disengaged from each other to take out from the cavity 12 the window plate 1 with integral frame member 2 having a longitudinally continuous hollow inner space 3.

In the above-mentioned method according to the present invention, the thermoplastic synthetic resin material 2' is applied with the pressure of the compressed gas on the order of several 10 kg/cm², i.e. on a pressure level which is significantly lower than pressure on the order of several 100 kg/cm² for injecting resin material into a mold cavity in a conventional injection molding process. The low pressure of the resin material 2' effectively protects the window plate 1 from damages, and prevents formation of burrs or flashing due to the leakage of the resin material 2' along the parting surface of the cavity plate 10 and the core plate 11. Furthermore, as the mold need not withstand a higher inner pressure, it may be of a less expensive and less complicated structure.

Moreover, the injection of the compressed gas into the resin material 2' is particularly advantageous in that, not only formation of undesirable sink mark can be avoided, but also the resin material 2' can be efficiently cooled by the compressed gas also from inside in a relatively short time to substantially improve the manufacturing productivity.

In order to achieve a satisfactory distribution of the resin material 2′ uniformly throughout the cavity 12 within the mold, the cavity is preferably constructed such that the compressed gas forms the hollow inner space 3 of an equivalent cross-sectional diameter of 3.5 mm or more. This is particularly advantageous when use is made of a resin material with a resistively small melt index, and hence with a relatively high viscosity.

In another embodiment of the method according to the present invention, as shown in Fig. 7, the compressed gas is injected into the resin material 2′ within the cavity 12 by using at least one injection tube 14 which is reciprocably provided for the core plate 11. The injection tube 14 may be moved into the resin material 2′ after completion of injection of the latter.

The present invention may also be applied to a window whose frame member 2 is provided with an ornamental portion 4 on its outer surface. The ornamental portion 4 may be composed of a metal strip, which is arranged on the cavity plate 10 when placing the window plate 1 in the mold, as shown in Fig. 8. On this occasion, the ornamental portion 4 is not applied with high injection pressure, so that it can be readily maintained in position by relatively simple means, e.g. a vacuum suction device, without being subjected to dislocation thereof. The ornamental portion 4 applied with a low pressure can be effectively protected from deformation or damages.

It will be readily appreciated from the foregoing description that the window according to the present invention includes an integral frame member with a longitudinally continuous hollow inner space which serves to protect the window plate from damages while at the same time avoiding formation of sink mark on the outer surface of the frame member. Furthermore, the method of manufacturing the windows according to the present invention ensures that even a synthetic resin material with a relatively high viscosity can be uniformly distributed throughout the cavity, without application of a higher injection pressure, and that the synthetic resin material in the mold cavity can be sufficiently urged by the compressed gas against the surfaces of the mold defining the cavity to realize a desired configuration of the frame member without undesirable sink mark.

## Claims

1. A window for an automobile or the like, comprising a window plate (1) and a frame member (2), which frame member (2) comprises a thermoplastic synthetic resin material formed into an integral structure with the window plate (1) by molding along at least one edge thereof, wherein said frame member (2) includes a substantially U-shaped cross-sectional portion comprising lip and web sections (2b,2d) which are spaced from and opposed to each other on outer and rear surfaces of the window plate (1), respectively, and a bridge section (2c) connecting the lip and web sections (2b,2d) with each other, characterized in that said frame member (2) has a longitudinally continuous hollow inner space (3).

2. The window as claimed in claim 1, wherein said thermoplastic synthetic resin material of the frame member (2) is polyvinylchloride resin, polyethylene resin, polystyrene resin, ABS resin, polyamide resin or modified PPO resin.

3. The window as claimed in claim 1 or 2, wherein said window plate (1) has a predetermined surface curvature.

4. The window as claimed in claim 1, 2 or 3, wherein said window plate (1) comprises a glass plate.

5. The window as claimed in claim 1, 2 or 3, wherein said window plate (1) comprises a transparent synthetic resin material.

6. A window according to any one of the preceding claims wherein said longitudinally continuous hollow inner space (3) is in said bridge section (2c).

7. A window as claimed in any one of the preceding claims wherein there are three longitudinally continuous hollow inner spaces (3).

8. A method of manufacturing a window for an automobile or the like, the window being in accordance with any one of claims 1 and 7, wherein said method comprises the steps of:
preparing a mold (10,11) having surfaces defining a cavity (12) of a predetermined volume therein, said cavity (12) being of a configuration which corresponds to said frame member (2);
placing at least one edge of the window plate (1) in the mold cavity (12);
injecting into the mold cavity (12) a predetermined amount of thermoplastic synthetic resin material in its molten state, and placing said synthetic resin material under cooling and solidification in said mold cavity (12), thereby to form the frame member (2) which is integral with said window plate (1) characterized in that said predetermined amount of thermoplastic synthetic resin material is smaller than said volume of the cavity (12);
and by the step before solidification of the thermoplastic synthetic resin material of injecting compressed gas into the thermoplastic synthetic resin material in said cavity (12) to urge said synthetic resin material against said surfaces of the mold (10,11) defining the cavity (12) whereby
the frame member (2) has a longitudinally continuous hollow inner space (3).

9. The method as claimed in claim 8, wherein the amount of the thermoplastic synthetic resin material injected into the mold cavity (12) is approximately 80-90% of the volume thereof.

10. The method as claimed in claim 8 or 9, wherein the injection of the compressed gas into the thermoplastic synthetic resin material is carried out simultaneously with the injection of the synthetic resin material into the mold cavity (12).

11. The method as claimed in claim 8 or 9, wherein the injection of the compressed gas into the thermoplastic synthetic resin material is carried out after the injection of the synthetic resin material into the mold cavity (12).

12. The method as claimed in claim 8, 9, 10 or 11, wherein the compressed gas is injected into the thermoplastic synthetic resin material under a pressure on the order of several 10 kg/cm².

13. The method as claimed in any one of claims 8 to 12, wherein the pressure of said compressed gas is maintained until completion of the cooling and solidification of said thermoplastic synthetic resin material in said mold cavity (12).

## Patentansprüche

1. Ein Fenster für ein Kraftfahrzeug oder dergleichen, mit einer Fensterscheibe (1) und einem Rahmenelement (2), wobei das Rahmenelement (2) ein thermoplastisches Kunstharzmaterial enthält, das mit der Fensterscheibe (1) zu einer einteiligen Struktur ausgebildet ist, indem es wenigstens entlang einer Kante derselben gegossen wird, wobei das Rahmenelement (2) einen im wesentlichen U-förmigen Querschnittsbereich mit Lippen- und Stegabschnitten (2b, 2d), die an den äußeren beziehungsweise hinteren Flächen der Fensterscheibe (1) voneinander beabstandet sind und einander gegenüberliegen, sowie einen Brückenabschnitt (2c) aufweist, der die Lippen- und Stegabschnitte (2b, 2d) miteinander verbindet, dadurch gekennzeichnet, daß das Rahmenelement (2) einen in Längsrichtung ununterbrochenen, hohlen Innenraum (3) besitzt.

2. Das Fenster gemäß Anspruch 1, bei dem das thermoplastische Kunstharzmaterial des Rahmenelementes (2) ein Polyvinylchlorid-Harz, ein Polyethylen-Harz, ein Polystyrol-Harz, ein ABS-Harz, ein Polyamid-Harz oder ein modifiziertes PPO-Harz ist.

3. Das Fenster gemäß Anspruch 1 oder 2, bei dem die Fensterscheibe (1) eine vorgegebene Flächenkrümmung besitzt.

4. Das Fenster gemäß Anspruch 1, 2 oder 3, bei dem die Fensterscheibe eine Glasscheibe umfaßt.

5. Das Fenster gemäß Anspruch 1, 2 oder 3, bei dem die Fensterscheibe (1) ein lichtdurchlässiges Kunstharzmaterial umfaßt.

6. Ein Fenster gemäß einem der vorangehenden Ansprüche, bei dem sich der in Längsrichtung ununterbrochene, hohle Innenraum (3) im Brückenabschnitt (2c) befindet.

7. Ein Fenster gemäß einem der vorangehenden Ansprüche, bei dem drei in Längsrichtung ununterbrochene, hohle Innenräume (3) vorhanden sind.

8. Ein Verfahren zur Herstellung eines Fensters für ein Kraftfahrzeug oder dergleichen, wobei das Fenster gemäß einem der Ansprüche 1 und 7 beschaffen ist, wobei das Verfahren die Schritte umfaßt:
Vorbereiten einer Gießform (10, 11) mit Oberflächen, die einen Hohlraum (12) mit einem vorgegebenen Volumen definieren, wobei der Hohlraum (12) eine Konfiguration besitzt, die dem Rahmenelement (2) entspricht;
Anordnen wenigsten einer Kante der Fensterscheibe (1) im Gießhohlraum (12);
Einspritzen einer vorgegebenen Menge eines thermoplastischen Kunstharzmaterials im geschmolzenen Zustand in den Gießhohlraum (12) und Anordnen des Kunstharzmaterials unter Ankühlung und Verfestigung im Gießhohlraum (12), wodurch das Rahmenelement (2) gebildet wird, das mit der Fensterscheibe (1) einteilig ausgebildet ist, dadurch gekennzeichnet, daß die vorgegebene Menge des thermoplastischen Kunstharzmaterials kleiner als das Volumen des Hohlraums (12) ist;
und durch den Schritt des Einblasens eines komprimierten Gases in das thermoplastische Kunstharzmaterial im Hohlraum (12) vor der Verfestigung des thermoplastischen Kunstharzmaterials, um das Kunstharzmaterial gegen die Flächen der den Hohlraum (12) definierenden Gießform (10, 11) zu pressen, wobei
das Rahmenelement (2) einen in Längsrichtung ununterbrochenen, hohlen Innenraum (3) besitzt.

9. Das Verfahren gemäß Anspruch 8, bei dem die Menge des thermoplastischen Kunstharzmaterials, das in den Gießhohlraum (12) eingespritzt wird, ungefähr 80-90% des Volumens desselben ausmacht.

10. Das Verfahren gemäß Anspruch 8 oder 9, bei dem das Einblasen des komprimierten Gases in das thermoplastische Kunstharzmaterial gleichzeitig zum Einspritzen des Kunstharzmaterials in den Gießhohlraum (12) ausgeführt wird.

11. Das Verfahren gemäß Anspruch 8 oder 9, bei dem das Einblasen des komprimierten Gases in das thermoplastische Kunstharzmaterial nach dem Einspritzen des Kunstharzmaterials in den Gießhohlraum (12) ausgeführt wird.

12. Das Verfahren gemäß Anspruch 8, 9, 10 oder 11, bei dem das komprimierte Gas in das thermoplastische Kunstharzmaterial unter einem Druck in der Größenordnung von mehreren 10 kg/cm² eingeblasen wird.

13. Das Verfahren gemäß einem der Ansprüche 8 bis 12, bei dem der Druck des komprimierten Gases bis zum Ende der Abkühlung und der Verfestigung des thermoplastischen Kunstharzmaterials im Gießhohlraum (12) aufrechterhalten wird.

## Revendications

1. Vitre pour une automobile ou similaire, comprenant une glace (1) et un élément d'encadrement (2), lequel élément d'encadrement (2) est réalisé en une résine synthétique thermoplastique, constituant une structure solidaire de la glace (1) par moulage le long d'au moins un bord de cette dernière, ledit élément d'encadrement (2) comprenant une partie à section transversale sensiblement en forme de U, comportant des parties formant lèvre et base (2b, 2d) qui sont mutuellement distantes et opposées, respectivement sur les surfaces extérieure et arrière de la glace (1), et d'une partie de liaison (2c) reliant entre elles les parties formant lèvre et base (2b, 2d), **caractérisée** en ce que ledit élément d'encadrement (2) possède un espace intérieur creux (3) longitudinalement continu.

2. Vitre selon la revendication 1, **dans laquelle** ladite résine synthétique thermoplastique de l'élément d'encadrement (2) est une résine de chlorure de polyvinyle, une résine de polyéthylène, une résine de polystyrène, une résine d'acrylonitrile-butadiène-styrène (ABS), une résine de polyamide ou une résine modifiée de polyphénylène oxyde (PPO).

3. Vitre selon la revendication 1 ou 2, **dans laquelle** ladite glace (1) possède une courbure prédéterminée de surface.

4. Vitre selon l'une quelconque des revendications 1 à 3, **dans laquelle** ladite glace (1) est constituée d'une plaque de verre.

5. Vitre selon l'une quelconque des revendications 1 à 3, **dans laquelle** ladite glace (1) est constituée d'une résine synthétique transparente.

6. Vitre selon l'une quelconque des revendications précédentes, **dans laquelle** ledit espace intérieur creux (3) longitudinalement continu se trouve dans ladite partie de liaison (2c).

7. Vitre selon l'une quelconque des revendications précédentes, **dans laquelle** il est prévu trois espaces intérieurs creux (3) longitudinalement continus.

8. Procédé de fabrication d'une vitre pour une automobile ou similaire selon l'une quelconque des revendications 1 à 7, **comprenant** les étapes consistant à :
préparer un moule (10, 11) possédant des surfaces définissant à l'intérieur du moule une cavité (12) d'un volume prédéterminé, ladite cavité (12) étant d'une configuration correspondant audit élément d'encadrement (2) ;
placer au moins un bord de la glace (1) dans la cavité de moule (12) ;
injecter dans la cavité de moule (12) une quantité prédéterminée de résine synthétique thermoplastique à l'état fondu, et faire refroidir et solidifier ladite résine synthétique dans ladite cavité de moule (12), pour former ainsi l'élément d'encadrement (2) solidaire de ladite glace (1),
**caractérisé** en ce que ladite quantité prédéterminée de résine synthétique thermoplastique est inférieure audit volume de la cavité (12),
et par l'étape consistant, avant la solidification de la résine synthétique thermoplastique, à injecter du gaz comprimé dans la résine synthétique thermoplastique dans la cavité (12), afin de pousser ladite résine synthétique contre lesdites surfaces du moule (10, 11) définissant la cavité (12), de sorte que
l'élément d'encadrement (2) possède un espace intérieur creux (3) longitudinalement continu.

9. Procédé selon la revendication 8, **selon lequel** la quantité de résine synthétique thermoplastique injectée dans la cavité de moule (12) est égale à environ 80-90% du volume de cette cavité.

10. Procédé selon la revendication 8 ou 9, **selon lequel** l'injection du gaz comprimé dans la résine synthétique thermoplastique est effectuée en même temps que l'injection de la résine synthétique dans la cavité de moule (12).

11. Procédé selon la revendication 8 ou 9, **selon lequel** l'injection du gaz comprimé dans la résine synthétique thermoplastique est effectuée après l'injection de la résine synthétique dans la cavité de moule (12).

12. Procédé selon l'une quelconque des revendications 8 à 11, **selon lequel** le gaz comprimé est injecté dans la résine synthétique thermoplastique à une pression de l'ordre de plusieurs dizaines de kg/cm².

13. Procédé selon l'une quelconque des revendications 8 à 12, **selon lequel** la pression dudit gaz comprimé est maintenue jusqu'à l'achèvement du refroidissement et de la solidification de ladite résine synthétique thermoplastique dans ladite cavité de moule (12).
